# EUROPÄISCHE PATENTSCHRIFT

(11) **EP 1 012 008 B1**
(45) Veröffentlichungstag und Bekanntmachung des Hinweises auf die Patenterteilung: **23.11.2005**
(21) Anmeldenummer: 98954113.1
(22) Anmeldetag: 03.09.1998
(51) Int. Cl.: B60R 21/32

(54) **EINRICHTUNG FÜR DEN INSASSENSCHUTZ IN EINEM KRAFTFAHRZEUG**
DEVICE FOR PROTECTING PASSENGERS IN A MOTOR VEHICLE
DISPOSITIF POUR LA PROTECTION DES PASSAGERS DANS UN VEHICULE AUTOMOBILE

(30) Priorität: 11.09.1997 DE 19740021
(43) Veröffentlichungstag der Anmeldung: 28.06.2000
(73) Patentinhaber: SIEMENS AKTIENGESELLSCHAFT, 80333 München (DE)
(72) Erfinder: NESPER, Reiner, D-26349 Jadeberg (DE); WATANABE, Shusei, Funabashi-city, Chiba, 274-0822 Japan (JP); HEITZER, Günter, D-93102 Pfatter (DE)
(86) Internationale Anmeldenummer: PCT/DE1998/002614
(87) Internationale Veröffentlichungsnummer: WO 1999/012779

(56) Entgegenhaltungen:
- EP-A- 0 841 222
- DE-A- 3 811 217
- DE-A- 19 519 130
- DE-A- 19 619 117
- DE-C- 19 609 076
- US-A- 5 467 272

## Beschreibung

Die Erfindung betrifft eine Einrichtung für den Insassenschutz in einem Kraftfahrzeug.

Eine solche Einrichtung weist gewöhnlich ein oder mehrere Aufprallsensoren zum Erkennen eines Aufpralls auf. Eine Auswerteschaltung wertet die von den Aufprallsensoren gelieferten Signale aus und aktiviert aufprallsignalabhängig ausgewählte und mit der Auswerteeinrichtung elektrisch verbundene Zündelemente von Insassenschutzmitteln. Solche Insassenschutzmittel sind insbesondere Fahrer- und Beifahrerairbag, Seitenairbag, Kopfairbag, Gurtstraffer oder ähnliches. Gewöhnlich ist die Auswerteeinrichtung in einem in zentraler Position im Fahrzeug angeordneten Steuergerät untergebracht. Ein solches Steurergerät ist vorzugsweise am Fahrzeugtunnel oder an einer sonstigen zentralen Fahrzeugposition, z. B. dem Armaturenbrett, vorzugsweise im Innenraum des Kraftfahrzeugs angeordnet. Das Steuergerät enthält eine Energiequelle, aus der die über jeweils eine Zweidrahtleitung angeschlossenen Zündelemente bei einem erkannten Aufprall mit Energie beaufschlagt werden.

Aus der WO 89/09146 A ist eine Einrichtung für den Insassenschutz in einem Kraftfahrzeug bekannt, bei der Aufprallsensoren über eine Busleitung mit einer zentralen Auswerteeinrichtung verbunden sind.

Aus der EP 0 471 871 B1 ist eine Einrichtung für den Insassenschutz in einem Kraftfahrzeug bekannt, bei der eine zentrale Auswerteeinrichtung über eine Busleitung mit ausgelagert angeordneten Zündeinheiten elektrisch verbunden ist.

Beiden Einrichtungen ist gemein, daß mit steigender Anzahl von angeschlossenen Sensoren bzw. Zündelementen die Anforderung an die Rechenleistung der zentralen Auswerteeinrichtung insbesondere auch aufgrund der zu bewältigenden Kommunikation stark ansteigt.

Aufgabe der Erfindung ist es deshalb, die Nachteile der bekannten Einrichtungen zu vermeiden, und insbesondere eine Einrichtung für den Insassenschutz in einem Kraftfahrzeug zu schaffen, die eine Vielzahl von Aufprallsensoren und/oder Zündelementen in einem Kraftfahrzeug bedienen kann.

Die Aufgabe wird gelöst durch die Merkmale des Patentanspruchs 1.

Dabei ist eine Aufprallsensoreinheit direkt über eine Datenleitung mit der zugeordneten Zündeinheit verbunden. Dabei ist die Aufprallsensoreinheit abseits einer zentralen Position im Fahrzeug angeordnet, so daß ein Aufprallsensor der Aufprallsensoreinheit einen Aufprall möglichst nahe an einem potentiellen Aufprallort erkennen kann. Solche abseits einer zentralen Position angeordneten Aufprallsensoren - also beispielsweise im vorderen Bereich, der Knautschzone des Fahrzeugs, oder seitlich an seinen Flanken - sind in der Fachwelt unter den Begriffen "ausgelagerte Sensoren" oder "Satellitensensoren" bekannt. Die Zündeinheit ist gewöhnlich räumlich nahe bei dem zugeordneten Insassenschutzmittel angeordnet. Dadurch wird verhindert, daß die Leitungswege zwischen der Zündsteuerung und dem dem Insassenschutzmittel zugeordneten Zündelement lang und deshalb kurzschlußgefährdet und anfällg für die Einkopplung von Störsignalen sind, was insbesondere ein unbeabsichtigtes Auslösen des Insassenschutzmittels zur Folge hätte. Wesentlich für die Erfindung ist, daß eine codierte Datenübertragung von der Aufprallsensoreinheit zur Zündeinheit erfolgt: Dazu weist die Aufprallsensoreinheit eine Schnittstelle zum Aussenden von Codesignalen auf die Datenleitung auf, die Zündeinheit eine Schnittstelle zum Empfangen dieser Codesignale.

Die Einrichtung ist vorzugsweise dahingehend weitergebildet, daß mehrere Aufprallsensoreinheiten und/oder mehrere Zündeinheiten mit der Datenleitung verbunden sind, wobei dann die Datenleitung als Busleitung ausgebildet ist und die Daten vorzugsweise im Multiplexverfahren übertragen werden.

Die Aufprallsensoreinheit ist derart ausgebildet, daß sie zumindest einen Aufprallsensor zum Erkennen eines Aufpralls sowie einen Auswerter - im folgenden Aufprallauswerter genannt - für den erkannten Aufprallverlauf aufweist.

Die Zündeinheit ist vorzugsweise dahingehend ausgebildet, daß sie einen Auswerter für die über die Datenleitung empfangenen Codesignale - im folgenden Zündauswerter -, eine Energiequelle zum Bereitstellen von Zündenergie für das zugeordnete Insassenschutzmittel, ein dem Insassenschutzmittel zugeordnetes Zündelement sowie ein durch den Zündauswerter steuerbares Schaltmittel zum elektrischen Verbinden der Energiequelle mit dem Zündelement aufweist.

Kennzeichen der Erfindung ist insbesondere, daß die Funktionalität der aus dem Stand der Technik bekannten zentralen Auswerteeinrichtung örtlich verteilt ist, wobei ein Teil dieser Funktionalität räumlich dem Aufprallsensor zugeordnet ist. Diese Funktionalität ist durch den Aufprallsuswerter realisiert, der vorzugsweise räumlich zusammen mit dem zugehörigen Aufprallensensor in einem gemeinsamen Gehäuse, dem Aufprallgerät angeordnet ist. Aufprallsensor, Aufprallauswerter und zumindest die zugehörige Schnittstelle zur Anbindung an die Daten- bzw. Busleitung bilden zusammen eine Aufprallsensoreinheit. Der weitere Teil der Funktionalität der bekannten zentralen Auswerteeinrichtung ist erfindungsgemäß räumlich dem Zündelement eines Insassenschutzmittels zugeordnet und in dem Zündauswerter implementiert. Zündauswerter, zugehörige Schnittstelle für die Anbindung zur Busleitung, zugehöriges Zündelement, Energiequelle sowie steuerbarer Schalter bilden zusammen eine Zündeinheit, wobei abgesehen von dem Zündelement alle sonstigen Bestandteile dieser Zündeinheit auch räumlich in einem gemeinsamen Gehäuse, dem Zündgerät untergebracht sind.

Die dem Aufprallsensor zugeordnete Funktionalität liegt vorzugsweise darin, eine Bewertung eines durch den Aufprallsensor erkannten Aufpralls durchzuführen. Ist beispielsweise der Aufprallsensor ein Beschleunigungssensor oder ein Sensor für die Deformation der Karosserieverformung am Sensorort, so liefert ein solcher Aufprallsensor ein dem Aufprallverlauf entsprechendes Signal, das im folgenden durch den Aufprallauswerter ausgewertet wird: Beispielsweise wird das ermittelte Aufprallsignal oder ein davon abgeleitetes Signal mit unterschiedlichen Schwellwerten verglichen. Übersteigt das Aufprallsignal einen der in einem Speicher der Aufprallsensoreinheit abgelegten Schwellwerte, so wird diese Information als codierte Nachricht auf die Busleitung gelegt mit der Absicht, eine oder mehrere zugeordnete Zündeinheiten über den aktuellen Aufprallzustand zu informieren. Folge eines Codesignals über den derzeitigen Aufprallzustand kann sein, daß eine oder mehrere der angeschlossenen Zündeinheiten ihren Betriebszustand ändern. Eine Änderung des Betriebzustandes kann insbesondere darin liegen, daß die Zündeinheit von einem Betriebszustand "Keine Auslösebereitschaft" in einen Betriebszustand "Erhöhte Auslösebereitschaft" versetzt wird. Der Betriebszustand "Keine Auslösebereitschaft" erfordert mindestens zwei festgelegte Codesignale von festgelegten Auswerteeinheiten zum Zünden des zugehörigen Zündelements. Der Betriebszustand "Erhöhte Auslösebereitschaft" dagegen erfordert lediglich das Erkennen eines einzigen weiteren festgelegten Codesignals einer festgelegten Aufprallsensoreinheit.

Die im Aufprallauswerter implementierten Auswertefunktionen beschränken sich also gewöhnlich auf eine Klassifizierung des gelieferten Aufprallsignals ggf auch unter Berücksichtigung der Dynamik bzw des zeitlichen Verlaufs der Aufprallsignals, aber ggf auch lediglich auf eine Diskretisierung eines analogen Aufprallsignals. Vorzugsweise wird nicht das Aufprallsignal direkt sondern ein durch Integration, Filterung, Vverstärkung, Mittelwertbildung, Einbeziehen von Vergangenheitswerten oder sonstige Operation aus dem Aufprallsignal abgeleitetes Signal den vorbeschriebenen Schwellwertvergleichen oder der vorbeschriebenen Diskretisierung unterzogen.

Die im Zündauswerter implementierte Funktionalität dagegen ist vorzugsweise auf eine Auslösestrategie/einen Auslösealgorithmus ausgerichtet, der in Abhängigkeit von den von den Aufprallsensoreinheiten ermittelten und übermittelten Aufprallzuständen ein Zünden des zugehörigen Zündelements veranlaßt. Vorzugsweise kann auch ein einziges Codesignal einer Aufprallsensoreinheit ein Zünden eines bestimmten Zündelements veranlassen, wobei dann die Zündeinheit lediglich dieses Zündcodesignal über seine Schnittstelle aufnimmt und decodiert, woraufhin der Zündauswerter das übermittelte Zündcodesignal mit einem abgespeicherten, vorschriftsmäßigen Zündcodesignal vergleicht und bei Übereinstimmung das steuerbare Schaltmittel leitend schaltet, so daß das Zündelement mit Energie beaufschlagt wird und zündet.

Vorzugsweise ist an die Datenleitung zusätzlich zu der mindestens einen Aufprallsensoreinheit eine Steuereinheit angeschlossen. Diese Steuereinheit kann unterschiedliche Funktionen erfüllen: So weist die Steuereinheit vorzugsweise einen Beschleunigungssensor auf, der unabhängig von sonstigen Aufprallsensoren einen Aufprall zumindest aus einem Richtungssegment erkennt. Um nach Möglichkeit einen Aufprall unabhängig von seiner Aufprallrichtung zu erkennen, ist bei der Steuereinheit vorzugsweise ein Längsbeschleunigungssensor zur Aufnahme von Beschleunigungen entlang der Fahrzeuglängsachse sowie ein Querbeschleunigungssensor zur Aufnahme von Beschleunigungen quer zur Fahrzeuglängsachse angeordnet. Ein Auswerter der Steuereinheit bewertet und klassifiziert gleich oder ähnlich dem Aufprallauswerter die von den zentralen Beschleunigungssensoren gelieferten Beschleunigungssignale und sendet beispielsweise Codesignale auf die Datenleitung aus, wenn das Querbeschleunigungssignal oder das Längsbeschleunigungssignal vorgegebene, in einem Speicher der Steuereinheit abgespeicherte Grenzwerte überschreiten. Derart erzeugte Codesignale können zum einen als Zündcodesignale direkt zum Zünden zugeordneter Zündelemente führen. Zum anderen jedoch ist vorzugsweise ein solches von der Steuereinheit geliefertes und auf der Auswertung der zentralen Beschleunigungssignale beruhendes Codesignal ein Freigabecodesignal, das eine festgelegte Zündeinheit wie vorbeschrieben von einem ersten Betriebszustand "Keine Auslösebereitschaft" in einen weiteren Betriebszustand "Erhöhte Auslösebereitschaft" versetzt, so daß das Zündelement nur dann ausgelöst wird, wenn gleichzeitig zu dem Freigabecodesignal ein weiteres Zündcodesignal einer vorgegebenen Aufprallsensoreinheit von der Zündeinheit als solches erkannt wird.

Anstelle der / zusätzlich zu den Beschleunigungssensoren der Steuereinheit können Sensoren insbesondere zur Objekt- und/oder Insassenerkennung vorgesehen sein. Die Auswertung der von diesen Sensoren gelieferten Signale, bzw. übermittelten Insassenzustände können ebenfalls zum Aussenden von Codesignalen durch die Steuereinheit auf die Busleitung führen. Vorzugsweise sind solche Codesignale überwiegend als Freigabe- oder Sperrsignale für das Auslösen eines an die Busleitung angeschlossenen Zündelements ausgelegt.

Die Steuereinheit ist vorzugsweise in einer zentralen Position, also beispielsweise am Fahrzeugtunnel, in der Umgebung des Fahrzeugtunnels oder am Armaturenbrett angeordnet: Eine solche räumliche Anordnung hat den Vorteil, daß für den Anschluß der meist im/am Fahrzeugsitz angeordneten Sensorik zur Öbjekt- oder Insassenerkennung kurze Leitungswege erforderlich sind. Zum anderen können zentral bei der Steuereinheit angeordneten Beschleunigungssensoren die Beschleunigung am Ort des Insassen erfassen. Der Auswerter der Steuereinheit, die zugehörige Schnittstelle für die Anbindung an die Busleitung, zugehörige Beschleunigungssensoren sowie - falls erforderlich - eine Schnittstelle zum Anschluß einer Einrichtung zur Objekt- oder Insassenerkennung bilden zusammen die Steuereinheit, wobei die Komponenten vorzugsweise zusammen in einem gemeinsamem Gehäuse als elektrisches Steuergerät angeordnet sind.

Die in den einzelnen Zündeinheiten abgelegten Auslösestrategien können unterschiedlichen Vorgaben folgen: So kann ein Zündelement nur dann gezündet werden, wenn eine einzige zugeordnete Aufprallsensoreinheit einen entsprechend starken Aufprall anzeigt. Dem Zündelement ist diejenige Aufprallsensoreinheit zugeordnet, die einen Aufprall erkennt, gegen den das zugehörige Insassenschutzmittel schützen soll - also ist beispielsweise ein Seitenaufprallsensor dem Zündelement eines Seitenairbags zugeordnet -, wobei bei mehreren gleichgerichteten Aufprallsensoren derjenige als maßgebender Sensor bestimmt wird, der den geringsten Abstand zum Insassenschutzmittel aufweist. Nach diesen Maßgaben sind Aufprallsensoren rund um das Fahrzeug herum an besonders aufprallträchtigen Stellen angeordnet. Jede Aufprallsensoreinheit erkennt damit einen Aufprall in einem zugeordneten räumlichen Bereich und ist maßgebend für das Auslösen bestimmter zugeordneter Insassenschutzmittel.

Die vorbeschriebene Auslösestrategie kann um eine sogenannte Safing-Funktion erweitert werden: Mindestens eine zusätzliche für dieselbe Aufprallrichtung empfindliche Aufprallsensoreinheit bzw. die zentral angeordnete Steuereinheit liefert ein Freigabesignal, sobald ein Aufprall zumindest ansatzweise erkannt wird - wenn also beispielsweise das zugehörige Sensorsignal einen niedrigen Schwellwert überschreitet. Zugeordnete Zündeinheiten können nur dann ausgelöst werden, wenn sowohl das Freigabesignal als auch das vorbeschriebene eigentliche Zündcodesignal der Aufprallsensoreinheit vorliegen.

Vorteil der Erfindung und ihrer Weiterbildungen ist insbesondere, daß die bei den bekannten zentralen Auswerteeinrichtungen bereitzustellende Rechenleistung verlagert werden kann. Bei den Aufprallsensoreinheiten und den Zündeinheiten kann Standard-Hard- und Software mit geringer Rechenleistung verwendet werden. Der Vorteil hinsichtlich der Rechenleistung äußert sich auch in einem Zeitgewinn beim Zünden von Zündelementen: Ist bei bekannten Einrichtungen eine ausgeklügelte Arbitrierung und Priorisierung im Abarbeiten von Sensorsignalen erforderlich, um zumindest ansatzweise geforderte Auslösezeiten einzuhalten, so wird bei der erfindungsgemäßen Einrichtung durch das einfache Ablegen von Betriebszuständen der Aufprallsensoreinheit auf die Busleitung und das Aufgreifen von relevanter Information von der Busleitung durch die Zündeinheiten ein frühzeitiges Auslösen von Zündelementen gewährleistet. Für die jeweilige Zündeinheit irrelevante Rechenoperationen werden im Zündauswerter nicht durchgeführt.

Die Vorteile potenzieren sich zunehmender Anzahl von Sensoren und Zündelementen. Auch der bislang enormen Rechenaufwand und Rechenzeit beanspruchende Kommunikationsaufwand zwischen einer bekannten zentralen Steuereinheit und ausgelagerten Sensor- oder Zündeinheiten ist durch die erfindungsgemäße Einrichtung verringert. Ferner ist die erfindungsgemäße Einrichtung äußerst änderungsfreundlich. Aufprallsensoreinheiten und/oder Zündeinheiten können nach Belieben an ein bestehendes Bussystem angeschlossen werden, wobei lediglich Software-Anpassungen erforderlich sind. Die zentrale Steuereinheit muß keine darüberhinaus keine übermäßige Rechenleistung mehr zur Verfügung stellen.

Vorteilhafte Weiterbildungen der Erfindung sind durch die Unteransprüche gekennzeichnet.

Ausführungsbeispiele der Erfindung und ihrer Weiterbildungen werden anhand der Zeichnung näher erläutert. Es zeigen:
- Figur 1: ein Blockschaltbild der erfindungsgemäßen Einrichtung,
- Figur 2: die räumliche Anordnung der erfindungsgemäßen Einrichtung nach Figur 1 in einem Kraftfahrzeug,
- Figur 3: Wahrheitstabellen zur Auslösestrategie einzelner Insassenschutzmittel,
- Figur 4: eine Aufprallsensoreinheit,
- Figur 5: eine Zündeinheit,
- Figur 6: eine zentrale Steuereinheit, und
- Figur 7: einen beispielhaften zeitlichen Aufprallverlauf.

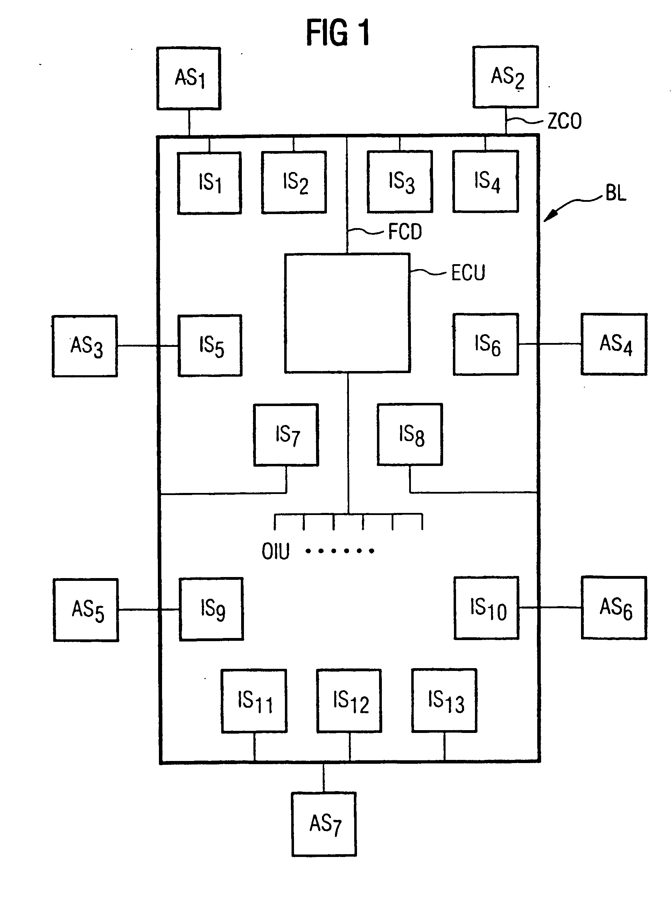

Figur 1 zeigt schematisch eine Ringbusleitung BL mit angeschlossenen Aufprallsensoreinheiten AS₁ bis AS₇ sowie angeschlossenen Zündeinheiten IS₁ bis IS₁₃ und ferner eine angeschlossene Steuereinheit ECU. An die Steuereinheit ECU sind weiter verschiedene Sensoren angeschlossen, beispielhaft eine Einrichtung zur Objekt- und/oder Insassenerkennung OIU.

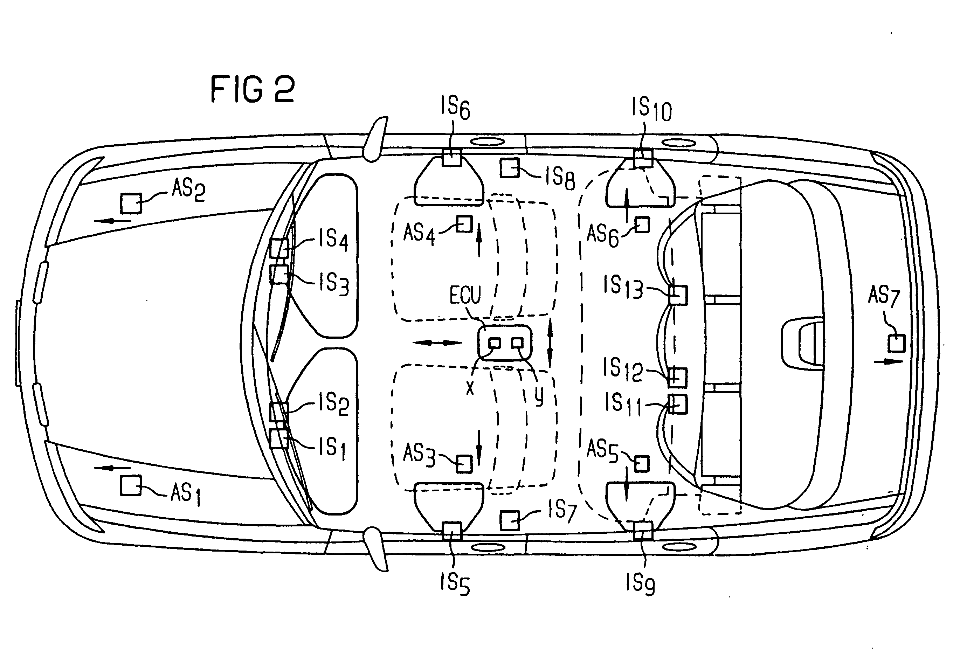

Figur 2 zeigt die räumliche Anordnung der Steuereinheit ECU der Aufprallsensoreinheiten AS₁ bis AS₇ und der Zündeinheiten IS₁ bis IS₁₃ gemäß Figur 1 in einem Kraftfahrzeug. Die die einzelnen Einheiten verbindende elektrische oder optische Busleitung BL gemäß Figur 1 ist aus Übersichtlichkeitsgründen in Figur 2 nicht eingezeichnet. Jede der Aufprallsensoreinheiten AS₁ bis AS₇ enthält einen beschleunigungsempfindlichen Aufprallsensor dessen Richtungsempfindlichkeit in Figur 2 durch einen Pfeil neben jedem Symbol für eine Aufprallsensoreinheit AS angegeben ist. Der erste Aufprallsensor AS₁ ist in der linken Fahrzeughälfte randseitig kühlernah angeordnet und empfindlich für Fahrzeugverzögerungen entlang der Fahrzeuglängsachse, wie sie bei einem Front- oder Schrägaufprall auftreten. Gleiches gilt für die zweite Aufprallsensoreinheit AS₂, die jedoch in der rechten Fahrzeughälfte randseitig kühlernah angeordnet ist. Die Aufprallsensoreinheiten AS₃ bis AS₆ sind beschleunigungsempfindlich für Fahrzeugquerbeschleunigungen, die Aufprallsensoreinheiten AS₃ und AS₅ insbesondere für Fahrzeugverzögerungen bei einem Aufprall auf die linke Fahrzeugseite, die Aufprallsensoreinheiten AS₄ und AS₆ für Fahrzeugquerverzögerungen bei einem Aufprall auf die rechte Fahrzeugseite. Die Aufprallsensoreinheiten AS₃ bis AS₆ sind randseitig des Fahrzeugs angeordnet und beispielsweise an den Karosseriesäulen, an dem Karossierquerträger oder den Türschwellern befestigt. Dabei sind je zwei Aufprallsensoreinheiten AS₃ und AS₄ räumlich in der Nähe der Vordersitze angeordnet, zwei Aufprallsensoreinheiten AS₅ und AS₆ räumlich in der Nähe der Rücksitze. Die siebte Aufprallsensoreinheit AS₇ ist am Fahrzeugheck angeordnet und empfindlich für positive Fahrzeugbeschleunigungen entlang der Längsachse wie sie bei einem Heckaufprall in Erscheinung treten. Die Aufprallsensoreinheiten AS gemäß Figur 2 sind also abseits einer zentralen Position in Randbereichen des Fahrzeugs angeordnet.

Jeder beschleunigungsempfindliche Aufprallsensor dieser Einrichtung kann natürlich nicht nur für eine Beschleunigung aus einer einzigen Richtung empfindlich sein sondern auch für eine Beschleunigung aus der dazu entgegengesetzte Richtung. Eine solche sogenannte zweipolige Ausbildung der verwendeten Beschleunigungssensoren kann insbesondere für die Erfassung von redundanten Beschleunigungen an unterschiedlichen Orten im Kraftfahrzeug und damit für die Erhöhung der Zuverlässigkeit einer Insassenschutzmittelauslösung erforderlich sein.

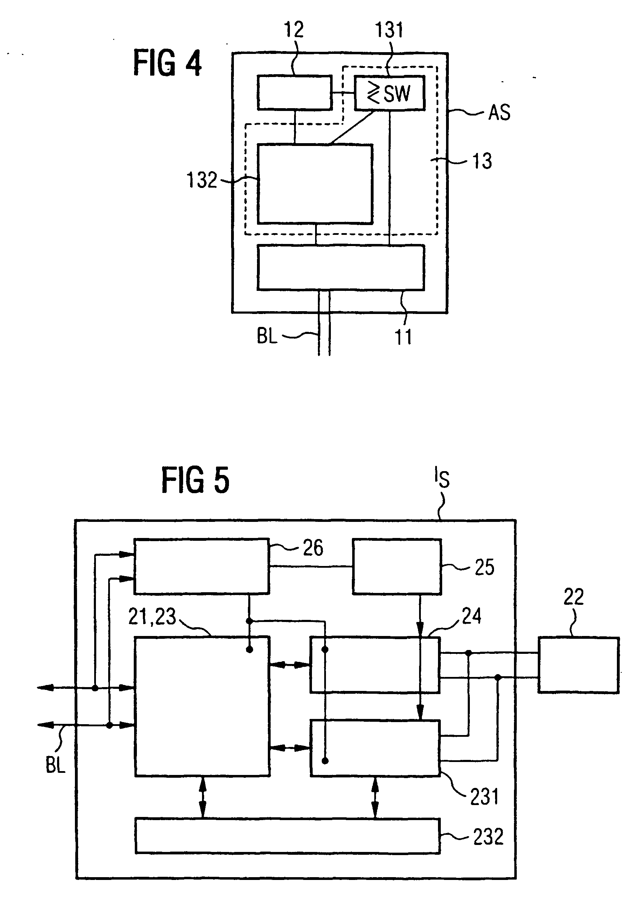

Figur 4 zeigt beispielhaft eine Aufprallsensoreinheit AS mit einem Aufprallsensor 12, mit einem Auswerter 13 mit einer Algorithmuseinheit 131 und einer Diagnoseeinheit 132, sowie mit einer Schnittstelle 11 zur Busleitung BL. Der Aufprallsensor 12 kann gemäß Figur 2 insbesondere als beschleunigungsempfindlicher Sensor ausgebildet sein, der ein der gemessenen Beschleunigung proportionales elektrisches Signal an die Alogrhithmuseinheit 131 liefert. Er kann jedoch aber auch als Beschleunigungsschalter ausgebildet sein, dessen beschleunigungsabhängig auslenkbare seismische Masse bei einer Mindestauslenkung ein Schaltsignal hervorruft. Alternativ kann der Aufprallsensor 12 auch als sonstiger Aufprallsensor, z. B. zum Erkennen einer Deformation der Fahrzeugkarosserie auf Grundlage unterschiedlicher physikalischer Prinzipien ausgebildet sein.

Im Aufprallauswerter 13, vorzugsweise ein Mikroprozessor oder eine PAL-Hardware-Schaltung jeweils mit zugehörigem Speicher, wird das von dem Aufprallsensor 12 gelieferte Signal ausgewertet. Aufgrund der Auswertung veranlaßt der Aufprallauswerter 13 ggf. das Aussenden einer codierten Nachricht auf die angeschlossene Busleitung BL. Beispielsweise wird in der Algorhithmuseinheit 131 das vom Aufprallsensor 12 gelieferte Aufprallsignal mit einem Schwellwert SW verglichen. Bei Überschreiten des Schwellwertes wird eine diese Information enthaltende Nachricht auf die Busleitung BL gelegt.

Die Schnittstelle 11 dient dabei zur Kommunikationsabwicklung und umfaßt sowohl die physikalische bis hin zur funktionalen Schnittstellenschicht. Sie beinhaltet die Logik für die Anbindung an die Busleitung BL inklusive Energie-Management und Zugriff-Management. Die Diagnoseeinheit 132 - vorzugsweise ein ASIC - überprüft mit geeigneten Diagnoseroutinen/Messungen die Funktionsfähigkeit des Aufprallsensors 12, der Algorhithmuseinheit 131 und der Schnittstelle 11. Die Algorhithmuseinheit 131 ist vorzugsweise als Mikroprozessor mit einem nicht-flüchtigen Speicher ROM für Arbeitsanweisungen und einem beschreibbaren nicht-flüchtigen Speicher EPROM für Betriebskennwerte ausgebildet. Betriebskennwerte sind insbesondere Parameter und Datensätze, die sich für unterschiedliche räumliche Anordnungen von Aufprallsensoreinheit AS unterscheiden. Die Betriebskennwerte werden vorzugsweise nach dem Einbau der Einrichtung in das Kraftfahrzeug am Bandende programmiert - so auch für die später beschriebenen Zündeinheiten. Die Diagnoseeinheit 132 ist in ihrer Hardware vorzugsweise getrennt von der Hardware der Algorhithmuseinheit 131 angeordnet. Vorzugsweise weist die Aufprallsensoreinheit AS zwei Aufprallsensoren mit unterschiedlichen physikalischen Meßprinzipien auf, die eine gegenseitige Überprüfung auf Funktionsfähigkeit erlauben. Beispielsweise wird erst dann eine entsprechende Nachricht von der Aufprallsensoreinheit AS auf die Busleitung BL ausgegeben, wenn durch die Algorhithmuseinheit 131 erkannt wird, daß beide Aufprallsensoren 12 einen Aufprall mit einer Mindeststärke erkannt haben.

Der Aufbau einer Zündeinheit IS der erfindungsgemäßen Einrichtung wird anhand des Blockschaltbilds gemäß Figur 5 erläutert. Die Funktionseinheit Schnittstelle 21 und Zündauswerter 23 nimmt von der Busleitung BL empfangene Codesignale auf, decodiert diese aufgenommenen Codesignale und wertet sie aus. Zur Ablage von über die Busleitung BL übermittelter Information ist ein Speicher 232 vorgesehen. Erkennt der Zündauswerter 23, daß ein ausreichend starker Aufprall vorliegt, so wird ein steuerbares Schaltmittel 24 leitend geschaltet. Das steuerbare Schaltmittel 24 verbindet in seinem leitenden Zustand elektrisch eine Energiequelle 25 und ein an die Zündeinheit IS angeschlossenes Zündelement 22, so daß die in der Energiequelle 25 - vorzugsweise ein Energiespeicherkondensator - gespeicherte Energie auf das Zündelement 22 übertragen wird und es zum Zünden veranlaßt. Eine Energie-Management-Einheit 26 koppelt die über die Busleitung BL übertragene Energie aus und versorgt damit Zündeinheitsbestandteile wie Schnittstelle 21 und Auswerter 23 und sorgt darüber hinaus für Bereitstellung ausreichender Energie in der Energiequelle 25. Eine Diagnoseeinheit 231 überprüft sämtliche Bestandteile der Zündeinheit IS durch Testmessungen. Vorzugsweise sind steuerbare Schaltmittel 24 und Diagno seeinheit auf einem ASIC angeordnet. Der Zündauswerter 23 ist vorzugsweise ein Mikroprozessor. Das Zündelement 22 der Zündeinheit IS ist vorzugsweise in einem Gasgenerator des zugeordneten Insassenschutzmittels angeordnet, so daß in Folge seines Zündens Gas freigesetzt wird. Die Zündeinheit IS ist räumlich nahe bei dem Insassenschutzmittel angeordnet. Aufgrund der somit erzielten geringen Leitungslänge zwischen Zündelement 22 und Zündeinheit IS wird die Gefahr eines Kurzschlusses auf dieser Leitung stark verringert. Die räumliche Anordnung der Zündeinheit IS bei dem zugeordneten Insassenschutzmittel ist dahingehend zu verstehen, daß sie abseits einer zentralen Position im Fahrzeug angeordnet ist.

Gemäß Figur 2 sind die Zündeinheiten IS₁ und IS₂ dem Fahrerairbag zugeordnet und verantwortlich für das Zünden je einer Stufe/Gasgenerator/Kammer des Fahrerairbags. Bei der räumlichen Nähe der Zündeinheiten IS₁ und IS₂ können diese auch zusammengefaßt und mit einem gemeinsamen Zündauswerter, einer gemeinsamen Schnittstelle und ggf. lediglich getrennten Energiequellen für jedes zugeordnete Zündelement ausgebildet sein. Die Zündeinheiten IS₃ und IS₄ bedienen in gleicher Weise zwei Stufen eines Beifahrerairbags. Die Zündeinheiten IS₅ und IS₆ sind Seitenairbags für Fahrer und Beifahrer zugeordnet, die Zündeinheiten IS₉ und IS₁₀ bedienen Seitenairbags für Fondinsassen. Die Zündeinheiten IS₇, IS₈ sowie IS₁₁ bis IS₁₃ bedienen Gurtstraffer für Fahrer und Beifahrer sowie 3 Fondinsassen.

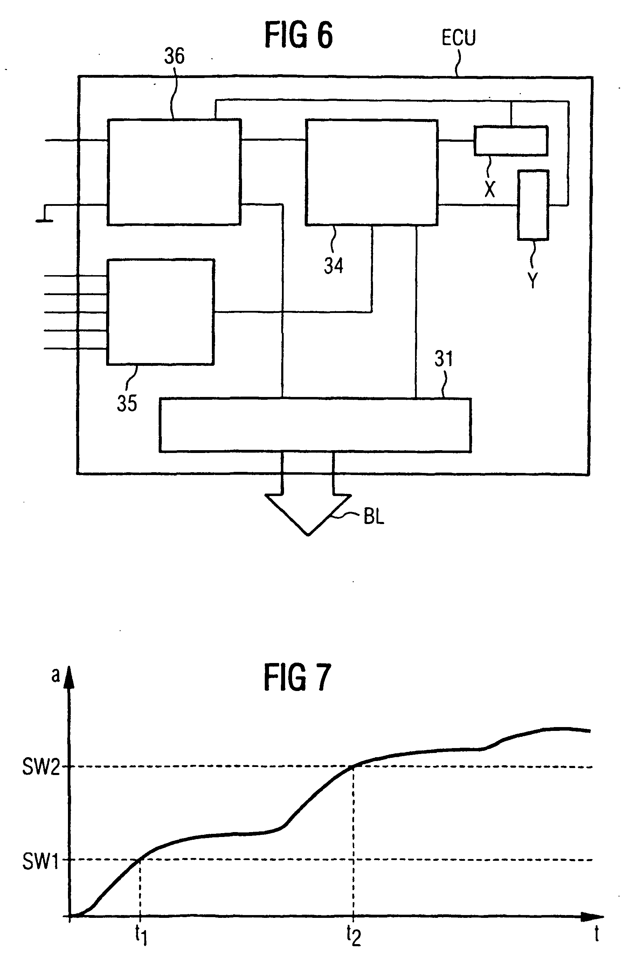

Figur 6 zeigt ein Blockschaltbild der Steuereinheit ECU, die gemäß Figur 2 an zentraler Position im Fahrzeug, also beispielsweise am Fahrzeugtunnel angeordnet und ebenfalls an die Busleitung BL angeschlossen ist. Vorzugsweise enthält die Steuereinheit ECU einen Beschleunigungssensor X, der empfindlich ist für positive und negative Fahrzeugbeschleunigungen entlang der Fahrzeuglängsachse, sowie einen Beschleunigungssensor Y, der empfindlich ist für positive und negative Fahrzeugbeschleunigungen in Querrichtung zur Fahrzeuglängsachse. Es ist ferner ein Auswerter 34 für die Signale der Beschleunigungssensoren X und Y vorgesehen. Abhängig von der Auswertung der Beschleunigungssignale gibt der Auswerter 34 über eine Schnittstelle 31 eine codierte Nachricht auf die Busleitung BL aus. Ferner ist eine Energie-Management-Einheit 36 vorgesehen, die beispielsweise die Bordnetzspannung des Fahrzeugs aufnimmt und in eine Versorgungsspannung für die Bauteile der Steuereinheit ECU wandelt. Ferner kann die Steuereinheit ECU eine weitere Schnittstelle 35 zur Anbindung von Einrichtungen zur Objekt- und/oder Insassenerkennung aufweisen. Signale solcher weiterer Sensoren werden ebenfalls im Auswerter 36 verarbeitet und können gleichfalls Ursache für die Ausgabe von Codesignalen durch die Steuereinheit ECU sein.

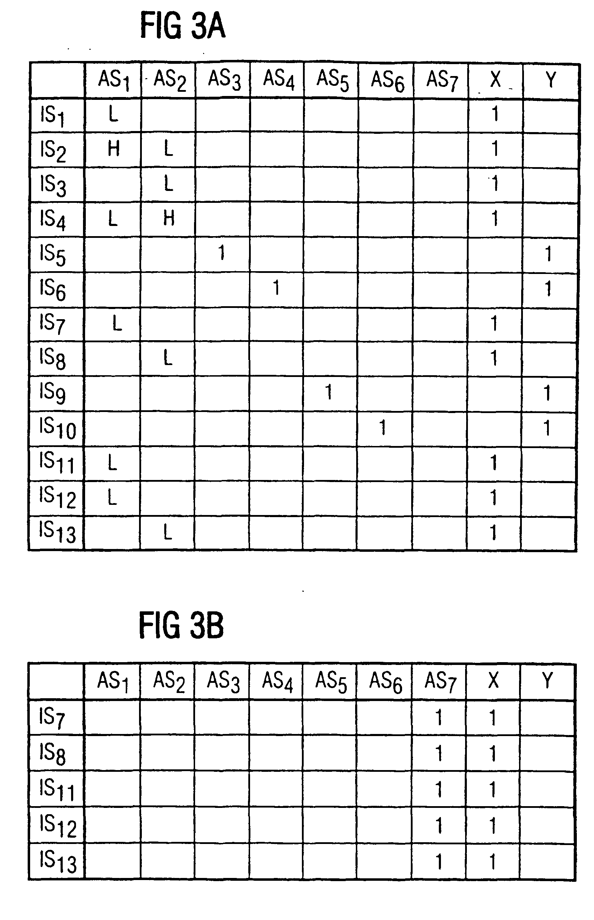

Figur 3 zeigt in Abhängigkeit der von den Aufprallsensoreinheiten AS gelieferten Nachrichten die Auslösung der Zündeinheiten einer Einrichtung gemäß Figur 1 und 2 in Form einer Wahrheitstabelle. Dabei sind horizontal die Aufprallsensoreinheiten AS₁ bis AS₇ sowie der zentrale Längsbeschleunigungssensor X und der zentrale Querbeschleunigungssensor Y aufgelistet. Vertikal sind die Zündeinheiten IS₁ bis IS₁₃ angeordnet. Die Einträge in der Tabelle gehorchen folgender Syntax und Semantik: Eine Eins steht für das Überschreiten eines Schwellwerts durch das Signal des zugehörigen Aufprallsensors, wenn nur ein Schwellwert als relevant angenommen wird, ein L steht für das Überschreiten eines niedrigen Schwellwerts durch den zugehörigen Aufprallsensor, ein H steht für das Überschreiten eines im Vergleich zum niedrigen Schwellwert höher angesetzten Schwellwertes, wenn mehrere Schwellwert als relevant angenommen werden.

Sie Wahrheitstabelle ist demnach folgendermaßen zu interpretieren: Die Zündeinheit IS₁ zündet das zugehörige Zündelement - eben die erste Stufe des Fahrerairbags -, wenn das Aufprallsignal der vorne links angeordneten Aufprallsensoreinheit AS₁ einen niedrigen Schwellwert überschreitet und gleichzeitig der zentrale Längsbeschleunigungssensor X das Überschreiten eines dort abgespeicherten Schwellwerts anzeigt. Diese auf Nachrichten der ersten Aufprallsensoreinheit AS₁ und der zentralen Steuereinheit ECU basierende Auslösestrategie ist in der Zündeinheit IS₁ bzw. dessen Zündauswerter abgelegt.

Vorzugsweise kann eine solche Wahrheitstabelle ODER-verknüpft werden mit einer weiteren Wahrheitstabelle nach Figur 3b, die dann für einzelne Insassenschutzmittel IS₇, IS₈ und IS₁₁ bis IS₁₃ nicht nur eine Auslösekombination von Aufprallsensornachrichten zuläßt sondern alternativ eine weitere Auslösekombination. Nach derartigen Schemata ist für jede Zündeinheit bzw. jedes Insassenschutzmittel eine angepaßte Auslösestrategie ableitbar.

Die der erfindungsgemäßen Einrichtung zugrundeliegende Philosophie ist, daß die möglichen Aufprallorte eines Fahrzeugs mit Auslöseeinheiten abgedeckt werden, wobei jeder Auslöseeinheit ein "Verantwortungsgebiet" zugeordnet ist. Weiterhin ist jeder Aufprallsensoreinheit mindestens ein Insassenschutzmittel zum Auslösen zugeordnet. Vorzugsweise sind Aufprallsensoreinheit und zugeordnete Zündeinheit räumlich nicht all zu weit voneinander entfernt. Um das Auslösen eines Insassenschutzmittels nicht alleinverantwortlich einer einzigen Auslösesensoreinheit zuzuordnen, erfordert die Zündeinheit vorzugsweise das Signal einer weiteren Aufprallsensoreinheit, wobei an das von der weiteren Aufprallsensoreinheit erkannte Aufprallsignal geringere Anforderungen hinsichtlich Stärke/Schwellwert verlangt werden. Vorzugsweise dient der Aufprallsensor AS₄ als Safing-Sensor für den Aufprallsensor AS₆ oder aber der Aufprallsensor AS₅ für den Aufprallsenor AS₆, sofern die Aufprallsensoreinheiten bipolar in ihrer Empfindlichkeit ausgerichtet sind. Die Safing-Funktion der weiteren Aufprallsensoreinheit kann auch durch die zentrale Steuereinheit übernommen werden, wobei sich richtungsabhängig Längsbeschleunigungssensor X und Querbeschleunigungssensor Y der zentralen Steuereinheit ECU vorzüglich für diese Safing-Funktion eignen. Die Verantwortlichkeitsgebiete der einzelnen Aufprallsensoreinheiten sind überlappend, so daß beispielsweise die Zündeinheit IS₇ gemäß Figur 2 sowohl durch die Aufprallsensoreinheiten AS₃ und AS₅ gleichberechtigt ausgelöst werden können.

Führt eine UND-Verknüpfung von Nachrichten der Steuereinheit ECU und der Aufprallsensoreinheiten AS zum Auslösen eines Zündelements 22 in einer Zündeinheit IS, so ist in dieser Zündeinheit IS ein Speicher vorzusehen, in dem die zuserst eintreffende Nachricht abgelegt wird. Ggf. weist eine solche Zündeinheit IS.dann einen Timer auf, der die Zeit zwischen dem Eintreffen der ersten Nachricht und dem Eintreffen der weiteren Nachricht überprüft und ggf. ein Auslösen verhindert, sofern eine vorgegebene Zeitspanne überschritten ist.

Sind Sensoren zur Innenraumüberwachung, Gewichtserkennung, Insassen- und/oder Objekterkennung, Kindersitzerkennung oder sonstiges an die Steuereinheit ECU angeschlossen, können durch den Auswerter der Steuereinheit ECU erkannte Zustände dieser Sensoren ebenfalls in Form von Codesignalen auf die Busleitung ausgegeben werden und auslösemaßgebend - auch im Sinne des Verhinderns einer Auslösung bzw. des Dosierens einer Auslösung - für einzelen Zündeinheiten sein.

Vorzugsweise kann ein von der Steuereinheit ECU auf die Busleitung BL ausgesendetes Codesignal z.B. auch folgende, über eine Beschleunigungssignalbewertung hinausgehende Information enthalten: Der Beifahrersitz ist belegt und gleichzeitig wird eine Mindestlängsbeschleunigung durch den zentralen Längsbeschleunigungssensor erkannt. Dieses Codesignal kann dann als Freigabesignal für die Zündeinheiten IS₃ und IS₄ wirken, die insbesondere dann gezündet werden, wenn zusätzlich die Aufprallsensoreinheit AS₂ einen entsprechenden Aufprall erkennt. Insofern können die Wahrheitstabellen nach Figur 2 als Auslösematrix für die diversen Zündeinheiten angesehen werden, wobei jede Zündeinheit ihre eigene auslöserelevante Signalkombinationen als Hard- oder Software implementiert hat.

Weiter kann die zentrale Steuereinheit ECU mit Längs- und Querbeschleunigungssensor X und Y als Safing-Sensoren für alle an die Busleitung angeschlossenen Zündeinheiten dienen, indem der Zustand der Busleitung BL durch die Steuereinheit ECU umschaltbar ist. Dabei können zumindest drei unterschiedliche Buszustände definiert sein:
BL1. Diagnosezustand
BL2. Auslösebereitschaft
BL3. Keine Auslösebereitschaft.

Nach Inbetriebnahme der Einrichtung schaltet die Steuereinheit ECU die Busleitung BL in den Betriebszustand Diagnose BL1. Hierbei können Zündeinheiten IS generell nicht gezündet werden. Übermittelte Codesignale zwischen den Auslöse- und Zündeinheiten AS uns IS oder der zentralen Steuereinheit ECU beziehen sich ausschließlich auf Diagnosefunktionen. Nach Abschluß des Diagnosebetriebszustandes BL1 schaltet die Steuereinheit ECU die Busleitung in den Betriebszustand BL3 "Keine Auslösebereitschaft". Einzelne Zündcodesignale von Aufprallsensoreinheiten führen in diesem Betriebszustand BL3 ebenfalls nicht zu einem Auslösen zugeordneter Zündeinheiten. Erst wenn zumindest einer der Beschleunigungssensoren X oder Y der Steuereinheit ECU einen Mindestaufprall registriert, wird die gesamte Busleitung BL in den Betriebszustand BL2 "Zündbereitschaft" geschaltet. Erst dann kann beispielsweise ein Zündcodesignal einer Aufprallsensoreinheit zum Auslösen einer zugeordneten Zündeinheit führen. Dabei kann vorgesehen sein, daß durch das Erkennen eines Aufpralls durch den Querbeschleunigungssensor Y auch alle Insassenschutzmittel für Front- und Heckaufprall grundsätzlich freigegeben sind, wie auch umgekehrt. Der Betriebszustand BL3 "Auslösebereitschaft" kann jedoch auch dahingehend verfeinert werden, daß ein Betriebszustand BL31 "Auslösebereitschaft Front- und Heckaufprall" eingeführt ist, wenn der Längsbeschleunigungssensor X der Steuereinheit ECU einen Front- oder Heckaufprall erkennt, sowie ein Betriebszustand BL32 "Auslösebereitschaft Seitenaufprall", wenn der Querbeschleunigungssensor Y der Steuereinheit ECU einen Aufprall: Erkennt dabei der Querbeschleunigungssensor Y der Steuereinheit ECU einen Seitenaufprall erkennt.

Vorbeschriebene Auslösestrategie unterscheidet sich von den anderen Auslösestrategien darin, daß bei einem bestimmten durch die Steuereinheit ECU festgelegten Buszustand durch die Steuereinheit ECU nur festgelegte Codesignale auf der Busleitung BL zugelassen sind. Wird beispielsweise von einer Aufprallsensoreinheit AS versucht, ein nicht zugelassenes Zündcodesignal im Betriebszustand "Diagnose" abzusetzen, so wird dies durch das Bussystem verhindert bzw. es wird zumindest verhindert, daß dieses Zündcodesignal bei seinem Empfänger zu einem Auslösen führen kann.

Ein Codewort der Einrichtung kann auf unterschiedlich Weise aufgebaut sein: Das Codewort kann beispielsweise lediglich aus der Zieladresse der anzusprechenden Zündeinheit bestehen. Kann beispielsweise die Zündeinheit IS₁ entweder durch die Aufprallsensoreinheit AS₁ oder durch die Aufprallsensoreinheit AS₂ oder durch die Aufprallsensoreinheit AS₇ gezündet werden, jeweils unter der Voraussetzung, daß auch der Längsbeschleunigungssensor X im Sinne eines Safing-Sensors einen Aufprall fesatstellt, so kann, wenn infolge des Längsbeschleunigungssignals X das Bussystem in Auslösebereitschaft versetzt worden ist, eine jede der vorgenannten Aufprallsensoreinheiten AS₁, AS₂ oder AS₇ ein Auslösen der Zündeinheit IS₁ einleiten, wenn sie eine codierte Nachricht bestehend alleinig aus der Adresse der Zündeinheit IS₁ und ggf weiterer Checksummenstellen o.ä. auf die Busleitung 1 absetzt.

Alternativ kann ein Codesignal einer Aufprallsensoreinheit derart ausgebildet sein, daß es lediglich den Absender enthält. Dann ist es Aufgabe des Zündauswerters, die auf der Busleitung anzutreffenden Nachrichten hinsichtlich ihres Absenders auszuwerten und zu überprüfen, ob aufgrund der Nachricht dieses Absenders ein Auslösen erforderlich ist. Kann eine Aufprallsensoreinheit mehrere Betriebszustände/Schwellwertvergleiche übermitteln, so empfiehlt sich, im Datenübertragungsformat zusätzlich zu Adressat und/oder Absender ein oder mehrere Statusbits zur Übermittlung des jeweiligen Betriebszustandes vorzusehen.

Die Busleitung kann als geschlossener Ringbus oder als offener Bus ausgebildet sein und unterschiedlichste Zugriffsstrategien aufweisen. Über die Busleitung können die angeschlossenen Aufprallsensoreinheiten und Zündeinheiten ferner mit Energie versorgt werden. Die Energieversorgung kann dabei über ein eigenes an die Busleitung angeschlossenes Schaltgerät bewerkstelligt werden oder von der Steuereinheit ECU übernommen werden. Die zentrale Steuereinheit ECU kann ferner als sogenannter Master für die Kommunikation ausgebildet sein. Dabei überwacht die Steuereinheit permanent den Betriebszustand der angschlossenen Aufprallsensor- und Zündeinheiten und diagnostiziert das Bussystem. Erkennt die Steuereinheit eine der Aufprallsensoreinheiten als defekt, so kann sie die Funktion dieser Aufprallsensoreinheit übernehmen und beispielsweise im Namen dieser defekten Aufprallsensoreinheit Nachrichten abschicken oder empfangen. Ferner wird die Adressverwaltung der an den Bus angeschlossenen Einheiten durch die Steuereinheit übernommen, genauso wie Initialisierungsroutinen bei Inbetriebnahme der Einrichtung. Ferner können in einem Speicher der Steuereinheit Nachrichten bzw. Betriebzustände der Aufprallsensor- und Zündeinheiten im Sinne einer Aufpralldatenaufzeichnung abgelegt werden.

Figur 7 zeigt einen beispielhaften Aufprallsignalverlauf A bei einem Frontaufprall, aufgenommenen von einem Beschleunigungssensor der Aufprallsensoreinheit AS₁ gemäß Figur 2. Erkennt der Aufprallauswerter 13, daß das Beschleunigungssignal A einen ersten Schwellwert SW1 überschritten hat, so wird eine entsprechend codierte Nachricht auf die Busleitung BL ausgesendet, z.B. mit der Adresse der Zündeinheit IS₇ für den Gurtstraffer, der bei korrekter Decodierung in der Zündeinheit IS₇ ausgelöst wird. Bei Überschreiten des Schwellwerts SW₂ durch das aufgenommene Beschleunigungssignal A zum Zeitpunkt t2 wird eine weitere codierte Nachricht, z. B. zum Ansteuern der ersten Stufe IS₁ des Fahrerairbags auf die Busleitung abgeschickt.

Die Steuereinheit kann einen Sensor zur Überschlagerkennung aufweisen, sodaß über die Busleitung bei einem Überschlag entsprechende Zündeinheiten von Insassenüberschlagschutzmitteln ausgelöst werden können. Gegebenenfalls kann eine eigene Aufprallsensoreinheit einen Sensor zur Überschlagerkennung enthalten.

Für die Bandendeprogrammierung zum Übergeben von Betriebskennwerten an die Aufprallsensoreinheiten und die Zündeinheiten nach ihrem Einbau in das Kraftfahrzeug ist ein weiterer Bus-Betriebszustand vorgesehen, in dem die Programmieruing zugelassen ist, ein Auslösen von Insassenschutzmitteln jedoch nicht. Bei der abschließenden Programmierung der Steuereinheit wird dieser Bus-Betriebszustand wieder aufgehoben.

## Patentansprüche

1. Einrichtung für den Insassenschutz in einem Kraftfahrzeug,
- mit mindestens zwei jeweils abseits einer zentralen Position im Fahrzeug angeordneten Aufprallsensoreinheiten (AS₁, AS₂, ...), die jeweils eine Schnittstelle (11) zum Aussenden eines Codesignals auf eine als Busleitung ausgebildete Datenleitung (BL) aufweisen und die mit der Busleitung verbunden sind, und
- mit mindestens zwei jeweils bei zugeordneten Insassenschutzmitteln angeordneten Zündeinheiten (IS₁, IS₂,...),
- die über die Busleitung (BL) direkt mit den Aufprallsensoreinheiten (AS₁, AS₂,...) verbunden sind,
- die jeweils eine Schnittstelle (21) zum Empfangen des Codesignals aufweisen und
- die jeweils eine Energiequelle (25) aufweisen, die Energie zum Auslösen des zugeordneten Insassenschutzmittels bereitstellt.

2. Einrichtung nach Anspruch 1, bei der die mindestens zwei Aufprallsensoreinheiten (AS₁, AS₂,...) jeweils einen Aufprallsensor (12) zum Erkennen eines Aufpralls und einen Auswerter (13) für ein Signal des Aufprallsensors (12) aufweisen.

3. Einrichtung nach Anspruch 1 oder Anspruch 2, bei der die mindestens zwei Zündeinheiten (IS₁, IS₂,...) jeweils einen Auswerter (23) für das Codesignal, ein dem Insassenschutzmittel zugeordnetes Zündelement (22) und ein durch den Zündauswerter (23) steuerbares Schaltmittel (24) zum elektrischen Verbinden der Energiequelle (25) mit dem Zündelement (22) aufweisen.

4. Einrichtung nach einem der vorhergehenden Ansprüche, bei der eine Steuereinheit (ECU) mit der Busleitung (BL) verbunden ist, wobei die Steuereinheit (ECU) eine Schnittstelle (31) zum Aussenden eines Codesignals auf die Busleitung (BL) aufweist.

5. Einrichtung nach Anspruch 4, bei der die Steuereinheit (ECU) in zentraler Position im Fahrzeug angeordnet ist und zumindest einen Beschleunigungssensor (X,Y) und einen Auswerter (34) für den ermittelten Beschleunigungsverlauf aufweist.

6. Einrichtung nach Anspruch 4 oder Anspruch 5, bei der die Steuereinheit (ECU) mit einer Einrichtung zur Objekt- oder Insassenerkennung (OIU) elektrisch verbunden ist.

7. Einrichtung nach Anspruch 5, bei der der Beschleunigungssensor (X) zur Aufnahme von Fahrzeuglängsbeschleunigungen ausgebildet ist.

8. Einrichtung nach Anspruch 7, bei der die Steuereinheit (ECU) einen weiteren Beschleunigungssensor (Y) zur Aufnahme von Fahrzeugquerbeschleunigungen aufweist.

9. Einrichtung nach einem der vorhergehenden Ansprüche, bei der eine Einrichtung zur Objekt- oder Insassenerkennung (OIU) mit der Busleitung verbunden ist, wobei die Einrichtung zur Objekt- oder Insassenerkennung (OIU) eine Schnittstelle zum Aussenden von Codesignalen auf die Busleitung (BL) aufweist.

10. Einrichtung nach Anspruch 2, bei der der Aufprallauswerter (13) in Abhängigkeit des aufgenommenen Aufprallverlaufs ein Zündcodesignal (ZCO) liefert.

11. Einrichtung nach Anspruch 10, bei der der Aufprallauswerter (13) ein Zündcodesignal (ZKO) liefert, wenn das vom Aufprallsensor (12) gelieferte Aufprallsignal oder ein aus dem Aufprallsignal abgeleitetes Signal einen Schwellwert (SW) überschreitet.

12. Einrichtung nach Anspruch 2, bei der der Aufprallsensor (12) als Beschleunigungssensor ausgebildet ist und ein Beschleunigungssignal liefert.

13. Einrichtung nach Anspruch 3 und Anspruch 10, bei der das Schaltmittel (24) durch den Zündauswerter (23) leitend geschaltet wird, wenn der Zündauswerter (23) ein festgelegtes Zündcodesignal (ZCO) erkennt.

14. Einrichtung nach Anspruch 3 und Anspruch 10, bei der das Schaltmittel (24) durch den Zündauswerter (23) leitend geschaltet wird, wenn der Zündauswerter (23) zumindest ein erstes festgelegtes Zündcodesignal (ZCO) einer ersten Aufprallsensoreinheit (AS) und/oder ein weiteres festgelegtes Zündcodesignal (ZCO) einer weiteren Aufprallsensoreinheit (AS) erkennt.

15. Einrichtung nach Anspruch 3, Anspruch 4 und Anspruch 10, bei der das Schaltmittel (24) durch den Zündauswerter (23) leitend geschaltet wird, wenn der Zündauswerter (23) zumindest ein festgelegtes Zündcodesignal (ZCO) der Aufprallsensoreinheit (AS) und ein codiertes Freigabesignal (FCO) der Steuereinheit (ECU) erkennt.

16. Einrichtung nach Anspruch 15, bei der das Freigabesignal (FCO) durch die Steuereinheit (ECU) in Abhängigkeit des durch den Beschleunigungssensor (X,Y) ermittelten Beschleunigungsverlaufes geliefert wird.

17. Einrichtung nach Anspruch 16, bei der das Freigabesignal (FCO) durch die Steuereinheit (ECU) geliefert wird, wenn die Beschleunigung (X,Y) einen Grenzwert überschreitet.

18. Einrichtung nach Anspruch 16, bei der das Freigabesignal (FCO) durch die Steuereinheit (ECU) geliefert wird, wenn durch die Steuereinheit (ECU) ein festgelegter Status der Einrichtung zur Objekt- oder Insassenerkennung (OIU) festgestellt wird.

## Claims

1. Device for protecting occupants in a motor vehicle
- with at least two impact sensor units (AS₁, AS₂, ...) arranged respectively in an off-centre position in the vehicle, each having an interface (11) to transmit a code signal to a data line configured as a bus line (BL) and being connected to the bus line, and
- with at least two ignition units (IS₁, IS₂, ...) arranged respectively in proximity to assigned occupant protection means,
- which are connected directly to the impact sensor units (AS₁, AS₂, ...) via the bus line (BL),
- each of which has an interface (21) to receive the code signal and
- each of which has an energy source (25), which supplies energy to activate the assigned occupant protection means.

2. Device according to claim 1, in which the at least two impact sensor units (AS₁, AS₂, ...) each have an impact sensor (12) to identify an impact and an evaluator (13) for a signal from the impact sensor (12).

3. Device according to claim 1 or claim 2, in which the at least two ignition units (IS₁, IS₂, ...) each have an evaluator (23) for the code signal, an ignition element (22) assigned to the occupant protection means and a switching means (24) that can be controlled by the ignition evaluator (23) to connect the energy source (25) electrically to the ignition element (22).

4. Device according to one of the preceding claims, in which a control unit (ECU) is connected to the bus line (BL), the control unit (ECU) having an interface (31) to transmit a code signal to the bus line (BL).

5. Device according to claim 4, in which the control unit (ECU) is arranged in a central position in the vehicle and has at least one acceleration sensor (X, Y) and one evaluator (34) for the detected acceleration pattern.

6. Device according to claim 4 or claim 5, in which the control unit (ECU) is connected electrically to a device for object or occupant identification (OIU).

7. Device according to claim 5, in which the acceleration sensor (X) is configured to detect longitudinal vehicle acceleration.

8. Device according to claim 7, in which the control unit (ECU) has a further acceleration sensor (Y) to detect transverse vehicle acceleration.

9. Device according to one of the preceding claims, in which a device for object or occupant identification (OIU) is connected to the bus line, with the device for object or occupant identification (OIU) having an interface to transmit code signals to the bus line (BL).

10. Device according to claim 2, in which the impact evaluator (13) supplies an ignition signal (ZCO) as a function of the detected impact pattern.

11. Device according to claim 10, in which the impact evaluator (13) supplies an ignition code signal (ZKO), if the impact signal supplied by the impact sensor (12) or a signal derived from the impact signal exceeds a threshold value (SW).

12. Device according to claim 2, in which the impact sensor (12) is configured as an acceleration sensor and supplies an acceleration signal.

13. Device according to claim 3 and claim 10, in which the switching means (24) is switched to conductive by the ignition evaluator (23), if the ignition evaluator (23) identifies a defined ignition code signal (ZCO).

14. Device according to claim 3 and claim 10, in which the switching means (24) is switched to conductive by the ignition evaluator (23), if the ignition evaluator (23) identifies at least a first defined ignition code signal (ZCO) from a first impact sensor unit (AS) and/or a further defined ignition code signal (ZCO) from a further ignition sensor unit (AS).

15. Device according to claim 3, claim 4 and claim 10, in which the switching means (24) is switched to conductive by the ignition evaluator (23), if the ignition evaluator (23) identifies at least a defined ignition code signal (ZCO) from the impact sensor unit (AS) and a coded release signal (FCO) from the control unit (ECU).

16. Device according to claim 15, in which the release signal (FCO) is supplied by the control unit (ECU) as a function of the acceleration pattern detected by the acceleration sensor (X, Y).

17. Device according to claim 16, in which the release signal (FCO) is supplied by the control unit (ECU), if the acceleration (X, Y) exceeds a limit value.

18. Device according to claim 16, in which the release signal (FCO) is supplied by the control unit (ECU), if the control unit determines a defined state of the device for object or occupant identification (OIU).

## Revendications

1. Dispositif de protection des occupants d'un véhicule automobile,
- comportant au moins deux unités de capteur de choc (AS1, AS2, ...) disposées chacune à l'écart d'une position centrale du véhicule et comprenant chacune une interface (11) pour l'émission d'un signal codé sur une ligne de données (BL) en forme de ligne de bus, et qui sont reliées à la ligne de bus, et
- comportant au moins deux unités d'amorçage (IS1, IS2, ...) disposées chacun à proximité de moyens de protection des occupants associés,
- qui sont reliées par la ligne de bus (BL) directement aux unités de capteur de choc (AS1, AS2, ...),
- qui comprennent chacune une interface (21) pour la réception du signal codé, et
- qui comprennent chacune une source d'énergie (25) qui fournit de l'énergie pour déclencher le moyen de protection des occupants associé.

2. Dispositif selon la revendication 1, dans lequel les au moins deux unités de capteur de choc (AS1, AS2, ...) comprennent chacune un capteur de choc (12) pour reconnaître une collision et un évaluateur (13) pour un signal du capteur de choc (12).

3. Dispositif selon la revendication 1 ou 2, dans lequel les au moins deux unités d'amorçage (IS1, IS2, ...) comprennent chacune un évaluateur (23) pour le signal codé, un élément d'amorçage (22) attribué au moyen de protection des occupants, et un moyen de commutation (24) pouvant être commandé par l'évaluateur d'amorçage (23) pour la connexion électrique de la source d'énergie (25) avec l'élément d'amorçage (22).

4. Dispositif selon l'une des revendications précédentes, dans lequel une unité de commande (ECU) est connectée à la ligne de bus (BL), l'unité de commande (ECU) comportant une interface (31) pour l'émission d'un signal codé sur le ligne de bus (BL).

5. Dispositif selon la revendication 4, dans lequel l'unité de commande (ECU) est disposée dans une position centrale du véhicule et comporte au moins un capteur d'accélération (X, Y) et un évaluateur (34) du déroulement de l'accélération déterminée.

6. Dispositif selon la revendication 4 ou 5, dans lequel l'unité de commande (ECU) est connectée électriquement à un dispositif pour la reconnaissance d'objets ou d'occupants.

7. Dispositif selon la revendication 5, dans lequel le capteur d'accélération (X) est agencé pour capter des accélérations longitudinales du véhicule.

8. Dispositif selon la revendication 7, dans lequel l'unité de commande (ECU) comprend un autre capteur d'accélération (Y) pour capter des accélérations transversales du véhicule.

9. Dispositif selon l'une des revendications précédentes, dans lequel un dispositif pour la reconnaissance d'objets ou d'occupants (OIU) est connecté à la ligne de bus, le dispositif pour la reconnaissance d'objets ou d'occupants (OIU) comprenant une interface pour émettre des signaux codés sur la ligne de bus (BL).

10. Dispositif selon la revendication 2, dans lequel l'évaluateur de choc (13) fournit un signal codé d'amorçage (ZCO) en fonction du déroulement d'une collision détectée.

11. Dispositif selon la revendication 10, dans lequel l'évaluateur de choc (13) fournit un signal codé d'amorçage (ZKO) lorsque le signal de choc fourni par le capteur de choc (12), ou un signal dérivé de ce signal de choc, dépasse une valeur de seuil (SW).

12. Dispositif selon la revendication 2, dans lequel le capteur de choc (12) est agencé comme détecteur d'accélération et fournit un signal d'accélération.

13. Dispositif selon la revendication 3 et la revendication 10, dans lequel le moyen de commutation (24) est commuté en conducteur par l'évaluateur d'amorçage (23) quand l'évaluateur d'amorçage (23) reconnaît un signal codé d'amorçage (ZCO) prédéterminé.

14. Dispositif selon la revendication 3 et la revendication 10, dans lequel le moyen de commutation (24) est commuté en conducteur par l'évaluateur d'amorçage (23) quand l'évaluateur d'amorçage (23) reconnaît au moins un premier signal codé d'amorçage (ZCO) prédéterminé d'une première unité de capteur de choc (AS) et/ou un autre signal codé d'amorçage (ZCO) prédéterminé d'une autre unité de capteur de choc (AS).

15. Dispositif selon la revendication 3, la revendication 4 et la revendication 10, dans lequel le moyen de commutation (24) est commuté en conducteur par l'évaluateur d'amorçage (23) lorsque l'évaluateur d'amorçage (23) reconnaît au moins un signal codé d'amorçage (ZCO) prédéterminé de l'unité de capteur de choc (AS) et un signal codé de déblocage (FCO) de l'unité de commande (ECU).

16. Dispositif selon la revendication 15, dans lequel le signal de déblocage (FCO) est fourni par l'unité de commande (ECU) en fonction du déroulement de l'accélération déterminé par le capteur d'accélération (X, Y).

17. Dispositif selon la revendication 16, dans lequel le signal de déblocage (FCO) est fourni par l'unité de commande (ECU) quand l'accélération (X, Y) dépasse une valeur limite.

18. Dispositif selon la revendication 16, dans lequel le signal de déblocage (FCO) est fourni par l'unité de commande (ECU) quand l'unité de commande (ECU) détermine un état préétabli du dispositif de reconnaissance d'objet ou d'occupant (OIU).
